**Europäisches Patentamt**

**European Patent Office**

**Office européen des brevets**

(19)

(11) Publication number : **0 497 533 A2**

(12) # EUROPEAN PATENT APPLICATION

(21) Application number : **92300673.8**

(22) Date of filing : **27.01.92**

(51) Int. Cl.⁵ : **G06F 3/147**

(30) Priority : **28.01.91 US 646927**

(43) Date of publication of application :
**05.08.92 Bulletin 92/32**

(84) Designated Contracting States :
**DE FR GB**

(71) Applicant : **NCR INTERNATIONAL INC.**
**1700 South Patterson Boulevard**
**Dayton, Ohio 45479 (US)**

(72) Inventor : **Britton, Wayne Harold**
**549 Warren Road**
**Ithaca, New York 14850 (US)**

(74) Representative : **Robinson, Robert George**
**International Patent Department NCR Limited**
**915 High Road North Finchley**
**London N12 8QJ (GB)**

(54) **Electronic price display apparatus.**

(57)    The invention provides for electronic price display apparatus comprising a plurality of price display units (64,76,82) for mounting in a retail establishment at respective locations each having a discrete address, and central processing means (52) arranged for selectively accessing each address and controlling each of said display units (64,76,82), characterized by inductive loop data transmission means having a transmission loop (58) driven by audio amplifying means (56), for transmitting data for accessing and controlling said display units, said inductive loop data transmission means being coupled to said central processing means (52) by way of signal modulator means (54), and further characterized by inductive loop receiving means (66) associated with said display units (64,76,82) for receiving data transmitted from said transmission loop (58) and for supplying data for said display units (64,76,82) by way of demodulator means.

**FIG. 4**

EP 0 497 533 A2

The present invention relates to an electronic price display apparatus. U.S. Pat. 4,002,886, discloses an electronic price display unit which can be remotely addressed and in which the price displayed can be remotely set and in which such display unit includes control means responsive to a first pulse on a signal bus for controlling storage of a second pulse on the bus. Also, U.S. Pat. 4,766,295, discloses an electronic pricing display system for displaying pricing and other information on shelf display tags wherein the display tags are battery operated and receive remotely transmitted infrared signals from optical heads mounted on the ceiling of the retail establishment.

These known systems are disadvantageous in that the apparatus employed is unnecessarily complex and expensive. In particular, the system of US 4,002,886 includes a plurality of data transmission buses for which a secure and inobtrusive location must be found, and the system of US 4 766 295 relies on an accurate and clear transmission path for the infrased signals.

The object of the present invention is to provide electronic price display apparatus which does not suffer from the above disadvantages and which particularly provides for efficient, low costs, price data transmitting means.

According to the present invention there is provided electronic price display apparatus comprising a plurality of price display units for mounting in a retail establishment at respective locations each having a discrete address, and central processing means arranged for selectively accessing each address and controlling each of said display units, characterized by inductive loop data transmission means having a transmission loop, driven by audio amplifying means, for transmitting data for accessing and controlling said display units, said inductive loop data transmission means being coupled to said central processing means by way of signal modulator means, and further characterized by inductive loop receiving means associated with said display units for receiving data transmitted from said transmission loop and for supplying data for said display units by way of demodulator means.

The present invention advantageously provides for a low cost price data transmission system of an electronic price display apparatus.

As a further advantage, the present invention also provides a low frequency inductive loop system for an electronic shelf labeling system in a retail establishment, which system employs a minimal amount of wiring for data transmission.

As another advantage, the present invention provides for a low power, wireless communication system for long life operation in controlling pricing display units in a retail establishment.

The invention is described further hereinafter, by way of example only, with reference to the accompanying drawings in which:-

Fig. 1 is a perspective view of a portion of a shelf supporting consumer goods and which includes associated display labels;

Fig. 2 is a block diagram of a first embodiment of the present invention coupled to an in store processor or computer;

Fig. 3 is a block diagram of a central processing unit coupled to a display structure of the first embodiment;

Fig. 4, is a block diagram of the control system of the first embodiment for the display drivers;

Fig. 5 is a schematic diagram of a modem chip coupled to a pickup coil of the first embodiment;

Fig. 6, shows the arrangement of Figs. 6A, 6B and 6C;

Figs. 6A, 6B and 6C, taken together, are schematic diagrams of the memory chips and the CPU used in the first embodiment of the present invention;

Figs. 7A and 7B are schematic diagrams of drivers for one series of displays used in the first embodiment of the present invention;

Figs. 8A and 8B are schematic diagrams of drivers for another series of displays used in the present invention;

Fig. 9 is a block diagram of a second embodiment of the present invention;

Fig. 10 is a block diagram of the structure of the second embodiment coupled to an in store processor;

Fig. 11 is a block diagram of a modem coupled to a CPU and a display of the second embodiment;

Fig. 12 is a block diagram of a CPU coupled to a power supply and a display and incorporated into the structure of Fig. 11;

Fig. 13 is a schematic diagram of a processor chip and a pair of comparators used in the control system of the present invention; and

Figs. 14A and 14B are schematic diagrams of a control microprocessor and inverters used in the control system of the second embodiment of the present invention.

Prior to describing the several figures of the drawing, it is noted that a modern grocery store includes thousands of items of merchandise stacked on the shelves and placed in cabinets or like structures or containers. A supermarket may have need for 20,000 to 30,000 displays for all the different items of merchandise. Each item usually comes in several sizes so that a price is needed for each size. While the price of each size of an item of merchandise in the form of a price tag may be placed directly on the item, the preferred manner of pricing items is to place a label or like media on the edge of the shelf containing or supporting each size item. The label usually includes the identification of the item, the size of the item, the price of the item, and a price per ounce or like measure of such item. The latter price is used by the customer to decide which size of the item is the best buy.

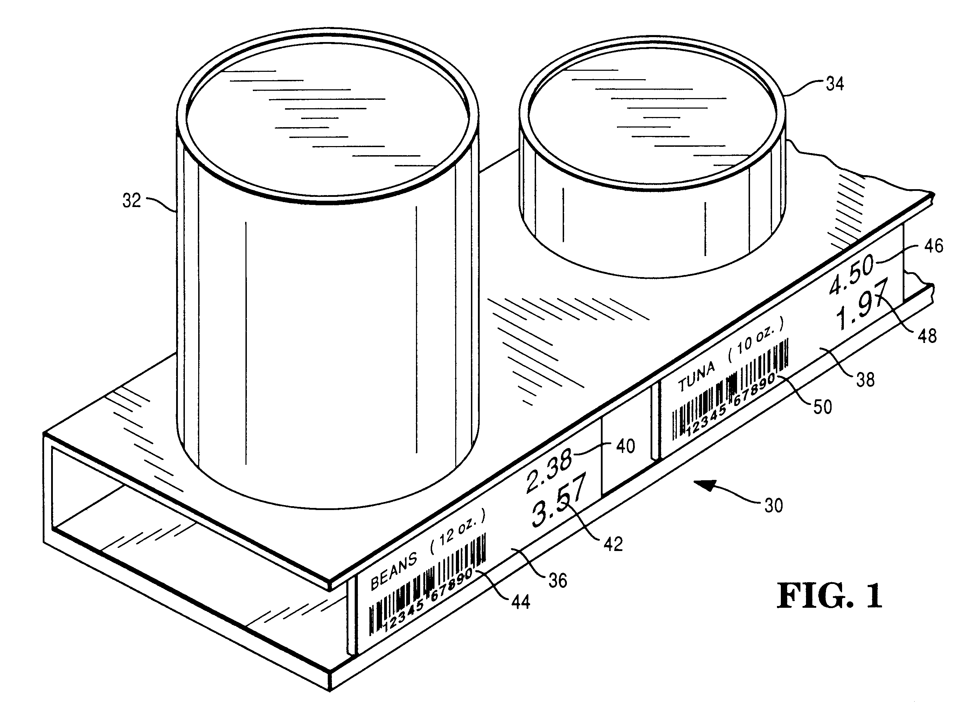

Referring now to the drawing, Fig. 1 is an illustration of an arrangement of consumer goods on a shelf 30 of a retail grocery store. As illustrated, the shelf portion 30 supports a can of beans 32 and a can of tuna 34 along with respective display labels 36 and 38. The label 36 includes a unit price 40, an item price 42 and a bar code 44. The label 38 includes a unit price 46, an item price 48, and a bar code 50. The labels 36 and 38 are typical of the thousands of such labels used in the retail store and are formed to fit in the front portion or the rail of the shelf 30. In this regard, the subject matter of the present invention is applicable for use in a shelf labeling system for any type consumer establishment, whether it is retail, wholesale, or other place of business.

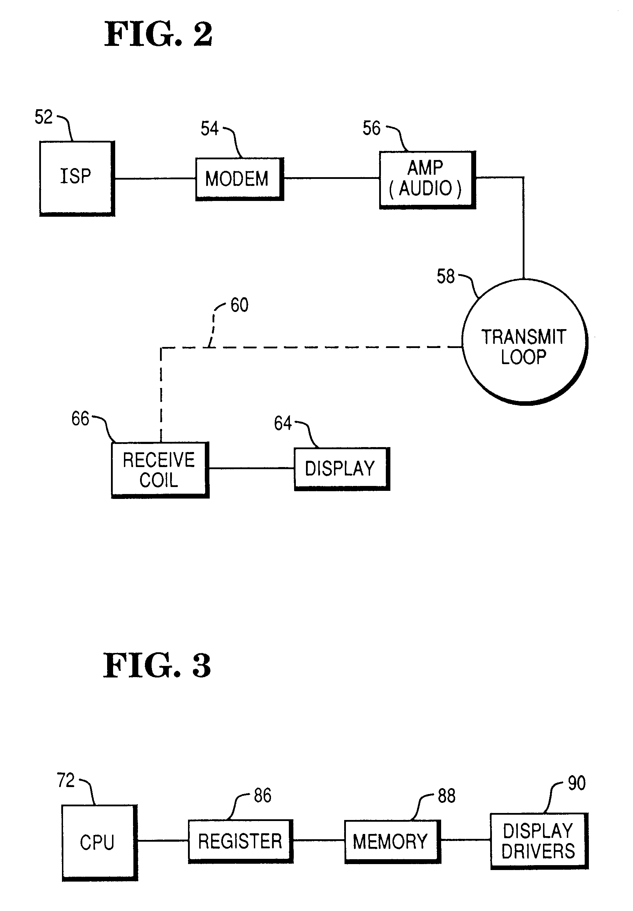

Fig. 2 shows a block diagram of certain structure in a first embodiment or arrangement of the present invention and includes a control circuit which provides for the control of data transmitted and received in the overall shelf labeling system.

The control circuit provides control for structure which includes an In Store Processor (ISP) that may be in the form of a personal computer 52 coupled by means of an RS232 interface to a modem 54. The modem 54 is coupled to an audio amplifier 56, in turn, coupled to a transmit loop 58. The transmit loop 58 communicates in wireless manner, as shown by the dashed line 60 with a receive or pick up coil 66 which coil is coupled to a display 64.

Fig. 2 is a block diagram which shows more detail of certain elements used in the shelf labeling system. The ISP or personal computer 52 is coupled by means of the RS232 interface to the modem 54, in turn, coupled to the audio amplifier 56. The transmit loop 58 communicates to the receive coil 66 which is coupled to the display 64.

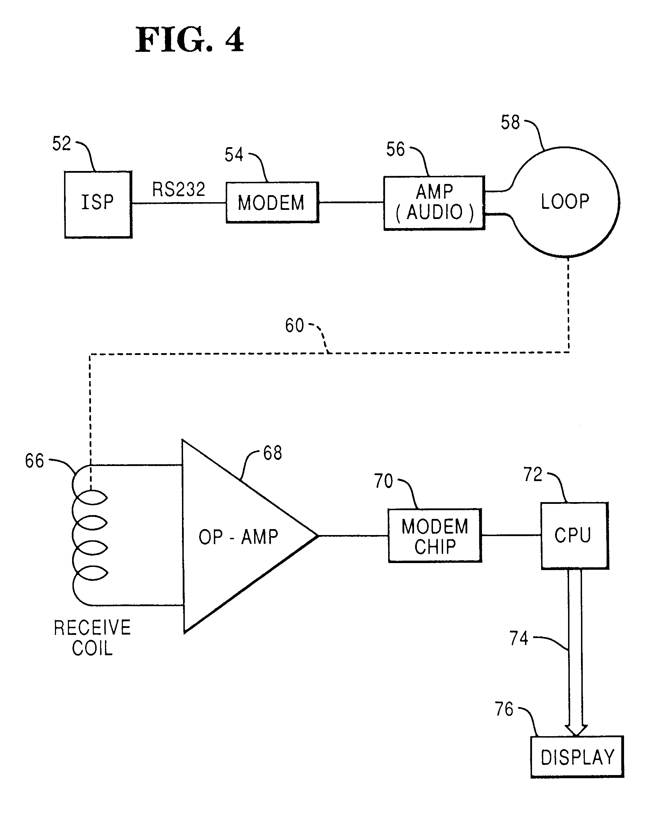

Fig. 3 is a block diagram of the control system for the display drivers. The central processing unit 72 is coupled to a register 86, in turn, to a memory 88, and to a plurality of display drivers 90. As illustrated in Fig. 4, the ISP or PC 52 is coupled by means of the RS232 interface to the modem 54 in turn, coupled to the audio amplifier 56 which controls the transmit loop 58. The RS232 interface between the PC 52 and the modem 54 is used to send the correct data from the ISP 52 to the modem 54. The transmit loop 58 is coupled in wireless manner, as indicated by the dashed line 60, with the pickup coil 66. The pickup coil 66 is coupled to the op-amp 68, in turn, coupled to the modem chip 70 which is coupled to the CPU 72. The CPU 72 is coupled in transmit communication by means of the bus 74 with the display unit 76. The modem chip 70 receives the frequency signal from the op-amp 68 and converts such signal into a digital signal. The CPU 72 takes the binary information and uses such information to turn on the correct segments in the display unit 76, the CPU 72 interprets such information, and then translates same into the correct signals to drive the display units.

The modem 54 includes a frequency shift key (FSK) which operates with a sign wave having two different frequencies in binary serial manner. When a binary 1 is being transmitted, one frequency is being used and when a binary 0 is being transmitted, the other frequency is being used, the effect of which is a shifting between the two frequencies. The audio signal is sent from the modem 54 to the amplifier 56 to be transmitted in the loop to the pick-up coil 66.

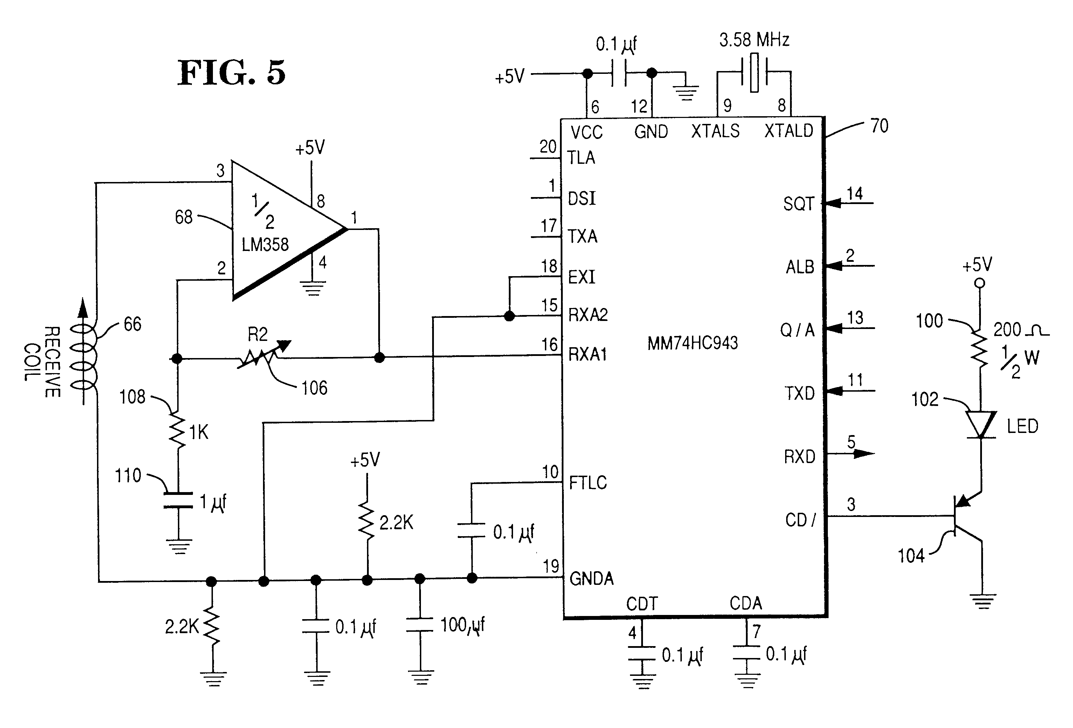

Fig. 5 is a schematic diagram of essential elements shown in the lower portion of Fig. 4 and which include the pickup coil 66, the op-amp 68 and the modem chip 70. A voltage of +5 volts is applied to a resistor 100 which is connected to an LED 102, in turn, connected to a transistor 104 which is connected to the CD/ terminal of the modem chip 70.

The RXAI terminal of the modem chip 70 is connected to terminal 1 of the op-amp 68 and through a variable resistor 106 to terminal 2 (output) of the op-amp 68 and to a resistor 108 and a capacitor 110 to ground. Terminal 3 (output) of the op-amp 68 is coupled to one side of the pickup coil and the other side of the coil is connected to ground. The modem chip 70 may be supplied by National Semiconductor, as No. MM74HC943, or by RCA Corporation, as No. CD2223F.

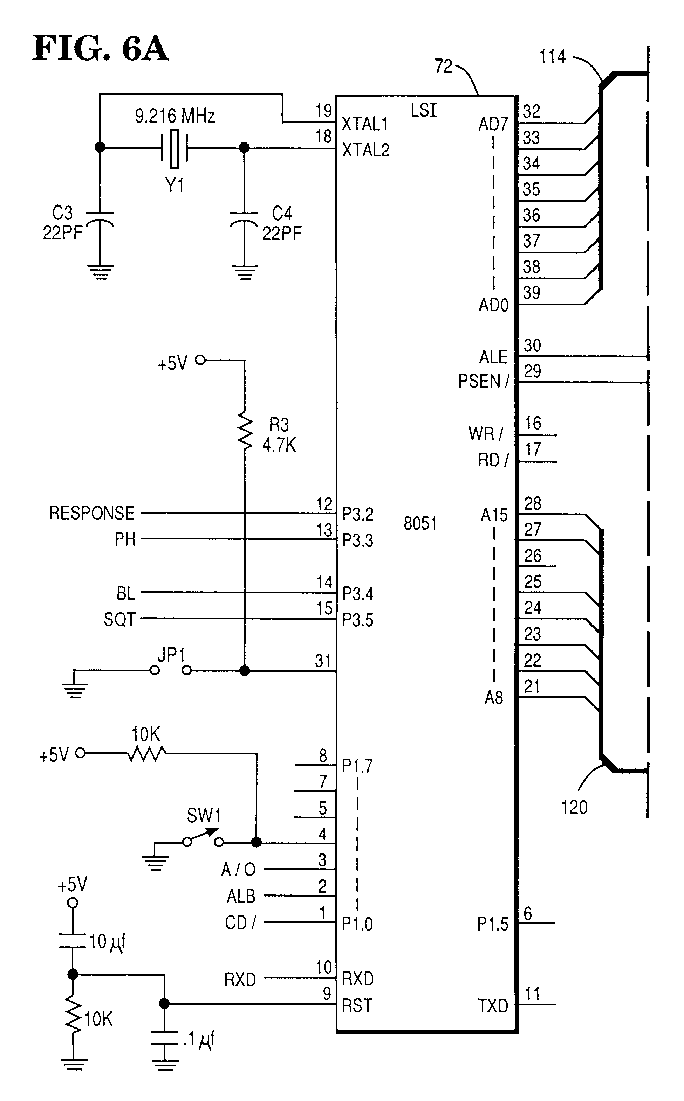

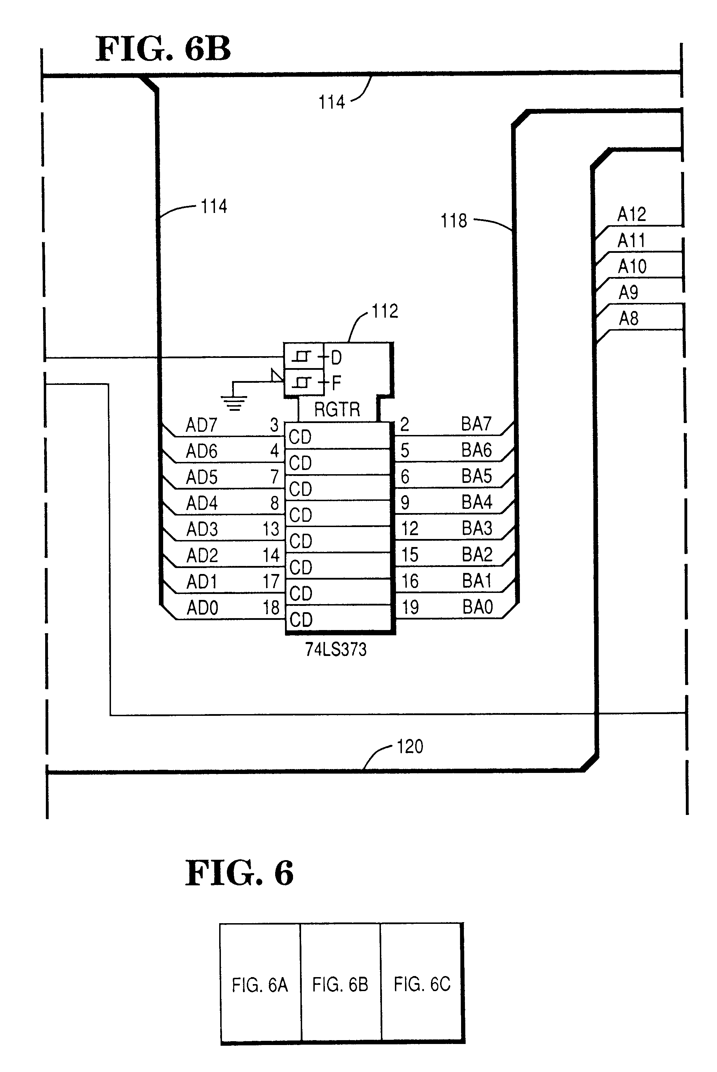

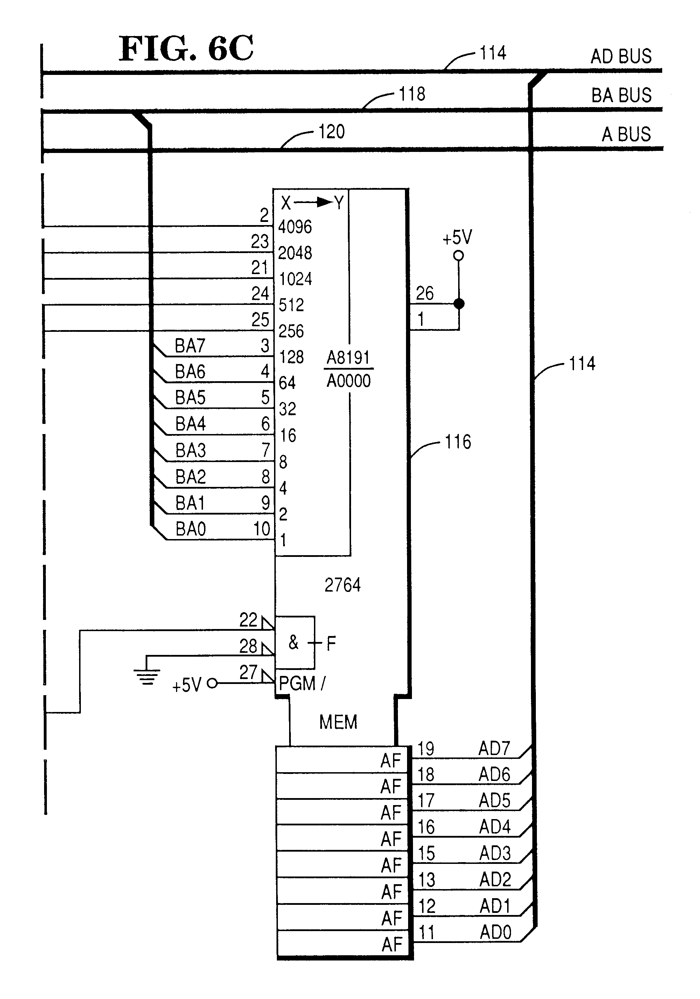

Fig. 6, on the sheet with Fig. 6B, is a diagram of the arrangement of Figs. 6A, 6B and 6C.

Fig. 6A illustrates an electronic chip which is identified further as the CPU 72 (Fig. 3) operating as the central processing unit for the display unit 76. The central processing unit 72 is supplied as Part No. 8051 by Intel Corporation. The CPU 72 is connected to a register 112 (Fig. 6B) by means of an AD bus 114. The register 112 operates as a latch and is supplied as Part No. 74LS373 by Intel Corporation. The register 112 is connected to a memory chip 116 (Fig. 6C) by means of a BA bus 118. The memory chip 116 is supplied as Part No. 2764 by Intel Corporation. An A bus 120 is connected to the CPU 72 (Fig. 6A) and to the memory chip 116 (Fig. 6C). The CPU 72 controls the flow of data to and from the displays 36 and 38, the register 112 keeps track of the operation, and the memory chip 116 stores the programs in the manner of operating as a programmable memory (PROM).

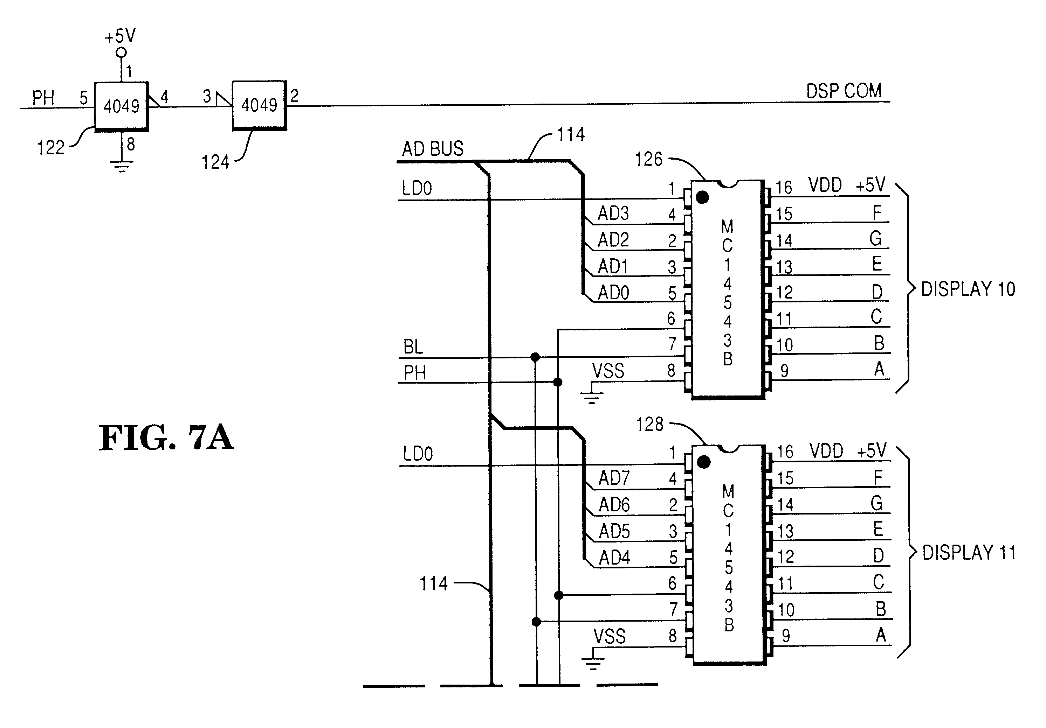

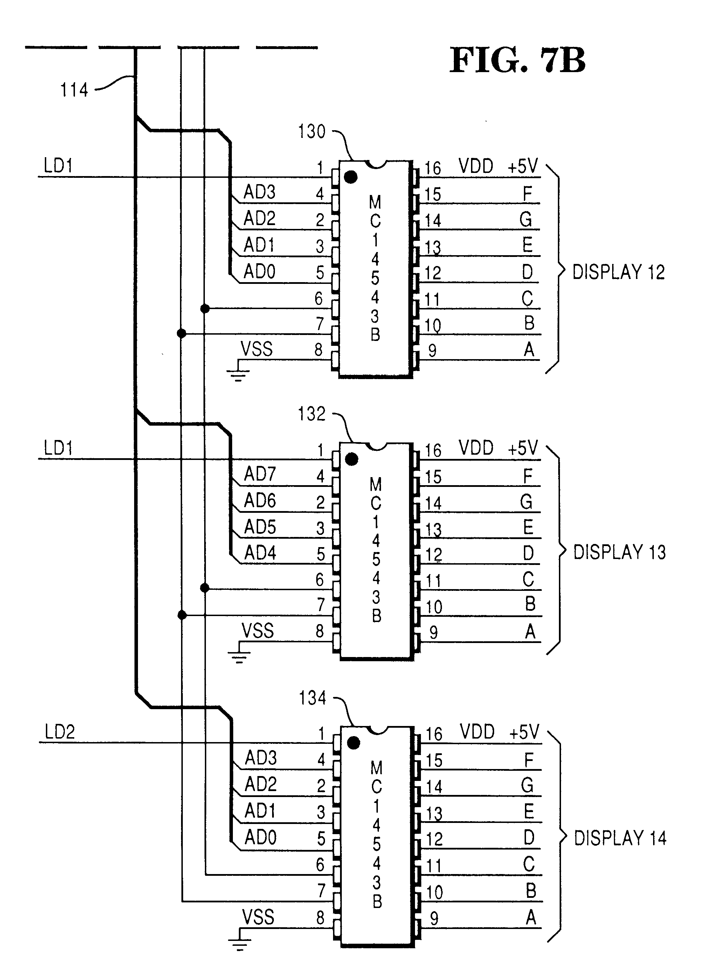

Figs. 7A and 7B illustrate the arrangement of the drivers for a plurality of display digits 10 through 14. A +5 volt supply (Fig. 7A) is connected to a hex buffer/converter 122 which is connected to a hex buffer/converter 124. The output of the converter 124 is a common lead to the display digits 10 to 14. A driver 126 (Fig. 7A) having leads AD0-AD3 of the AD bus 114 as an input thereto drives the display digit 10. A driver 128 having leads AD4-AD7 of the AD bus 114 as an input drives the display digit 11. A driver 130 (Fig. 7B) having the leads AD0-AD3 of the AD bus drives the display digit 12, a driver 132 having the leads AD4-AD7 drives the display digit 13, and a driver 134 having the leads AD0-AD3 drives the display digit 14.

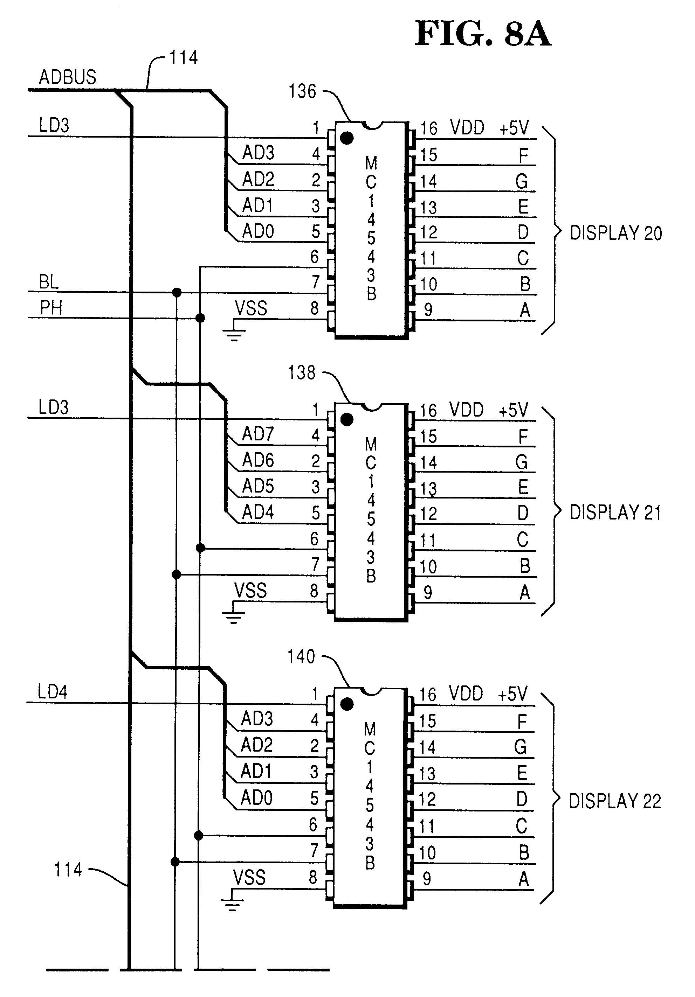

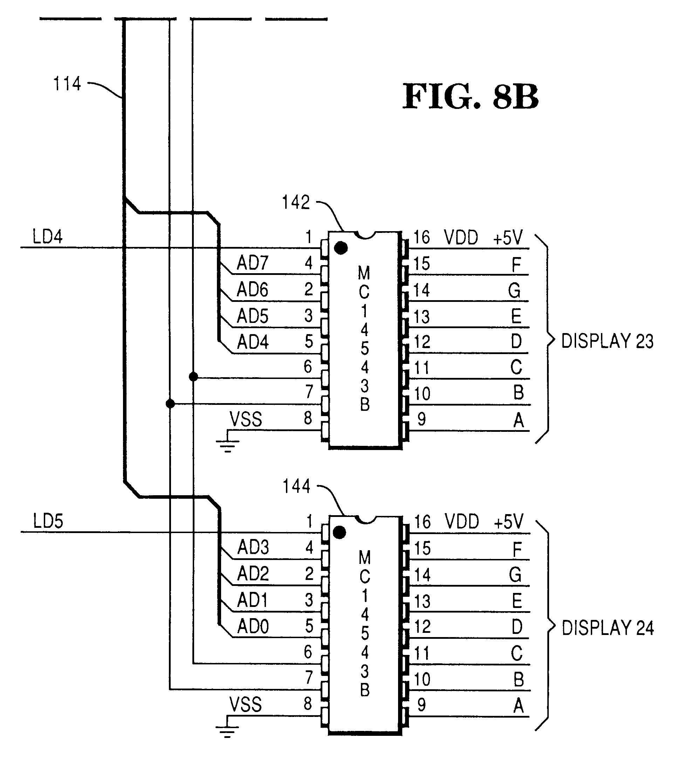

Figs. 8A and 8B illustrate the arrangement of the drivers for the display digits 20 through 24. A driver 136 (Fig. 8A) having leads AD0-AD3 of the AD bus 114 as an input thereto drives the display digit 20. A driver 138 having leads AD4-AD7 of the AD bus 114 as an input drives the display digit 21. A driver 140 having the leads AD0-AD3 drives the display digit 22. A driver 142 (Fig. 8B) having the leads AD4-AD7 drives the display digit 23 and a driver 144 having the leads AD0-AD3 drives the display digit 24. Each of the drivers 126 to 144 is further identified as Part No. MC14543B supplied by Intel Corporation. The first arrangement was constructed as a wire-wrapped prototype unit wherein the controller for the shelf rail and the display were contained in one module.

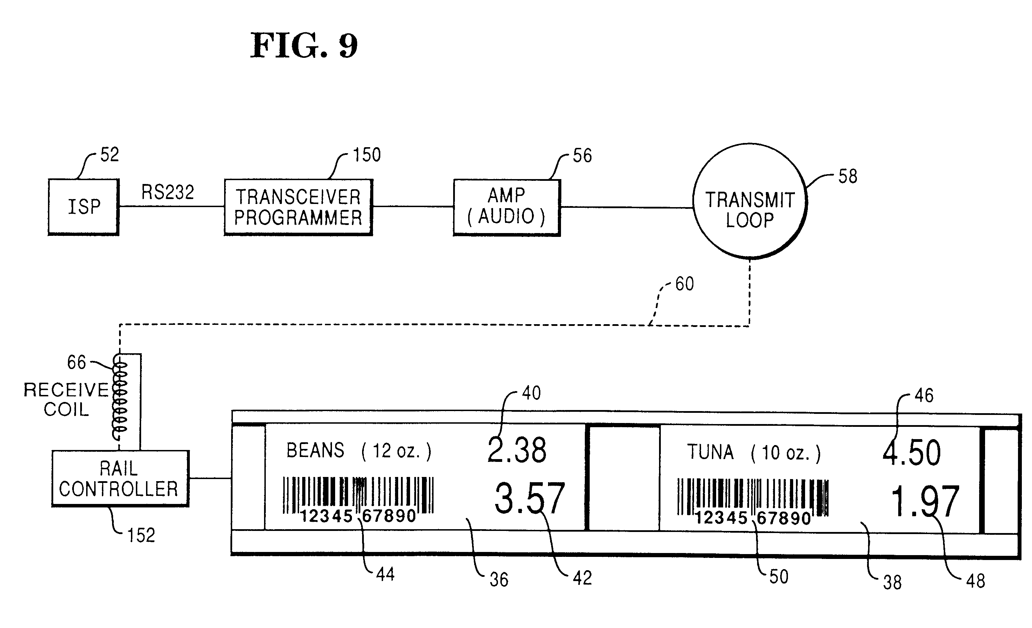

Fig. 9 is a block diagram of certain structure showing a second arrangement or preferred embodiment of the present invention and utilizes some of the same elements, as shown in Figs. 1, 2 and 4. The In Store Processor 52 is coupled by means of the RS232 interface to a transceiver programmer 150. The transceiver programmer 150 is coupled to the audio amplifier 56, in turn, coupled to the transmit loop 58. The transmit loop 58 communicates in wireless manner, as shown by dashed line 60, to the receive coil 66. The receive coil 66 is connected with a rail controller 152 which is connected to and controls the display, as represented by display labels 36 and 38 and as shown in Fig. 1. The rail controller 152 performs the functions of the various elements shown in Figs. 5, 6A, 6B and 6C.

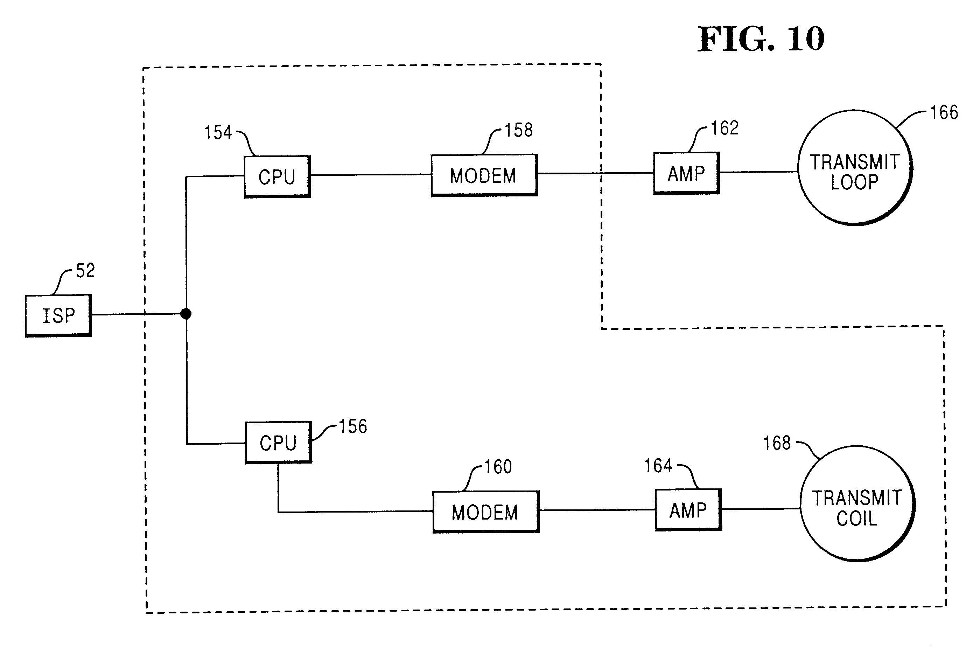

The transceiver programmer 150 includes certain elements shown in Fig. 10 and which are within the dotted portion thereof. The ISP 52 is coupled to a first CPU 154 and to a second CPU 156, in turn, coupled to respective modems 158 and 160. The modem 158 is coupled to an audio amplifier 162, in turn, coupled to a transmit loop 166 and the modem 160 is coupled to an audio amplifier 164, in turn, coupled to a transmit loop 168. The amplifier 162 and the transmit loop 166 are a part of the transceiver portion of the transceiver programmer 150 but are not a physical part thereof.

The rail controller 152 operates to control all or a portion of the display units along a shelf of goods. The address of the rail controller 152 is followed by the addresses of individual display units on the shelf when messages are communicated from the ISP 52.

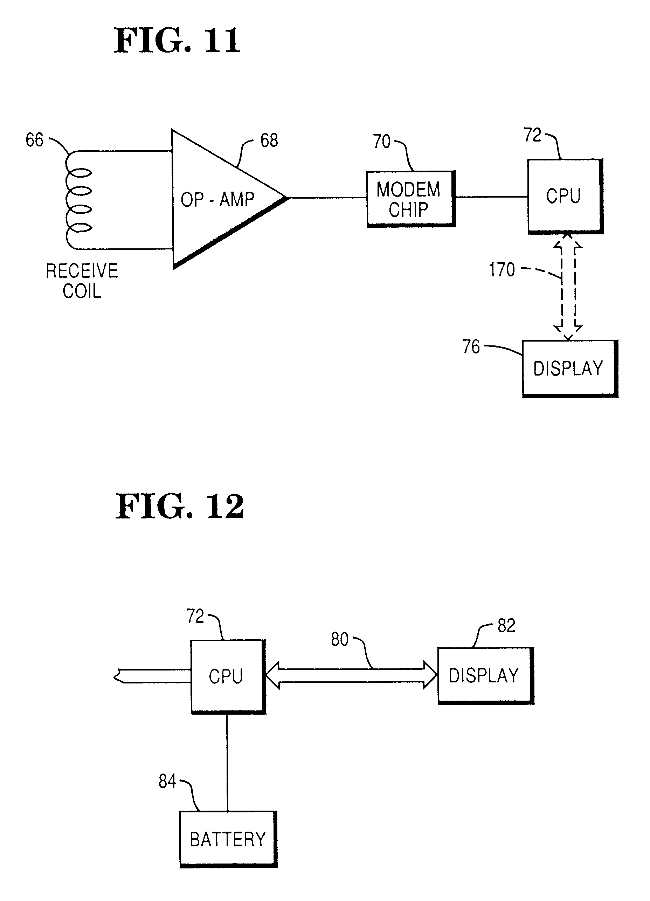

Figs. 11 and 12 are block diagrams of the preferred embodiment of the structure and function of the present invention. Fig. 11 includes certain elements similar in structure to elements of Fig. 4 but different in operation. The pickup coil 66 is coupled to the op-amp 68, in turn, coupled to the modem chip 70. The modem chip 70 is coupled to the CPU 72 which is coupled by a signal bus 170, to the display unit 76. The pickup coil 66, the op-amp 68, the modem chip 70 and the CPU 72 are included in the rail controller 152 (Fig. 9). The display unit 76 includes a CPU 72 coupled to the battery 84 and to a display portion 82 by means of the signal bus 80. The functions of the various elements shown in Figs. 7A, 7B, 8A and 8B of the first arrangement are performed by the display module 76.

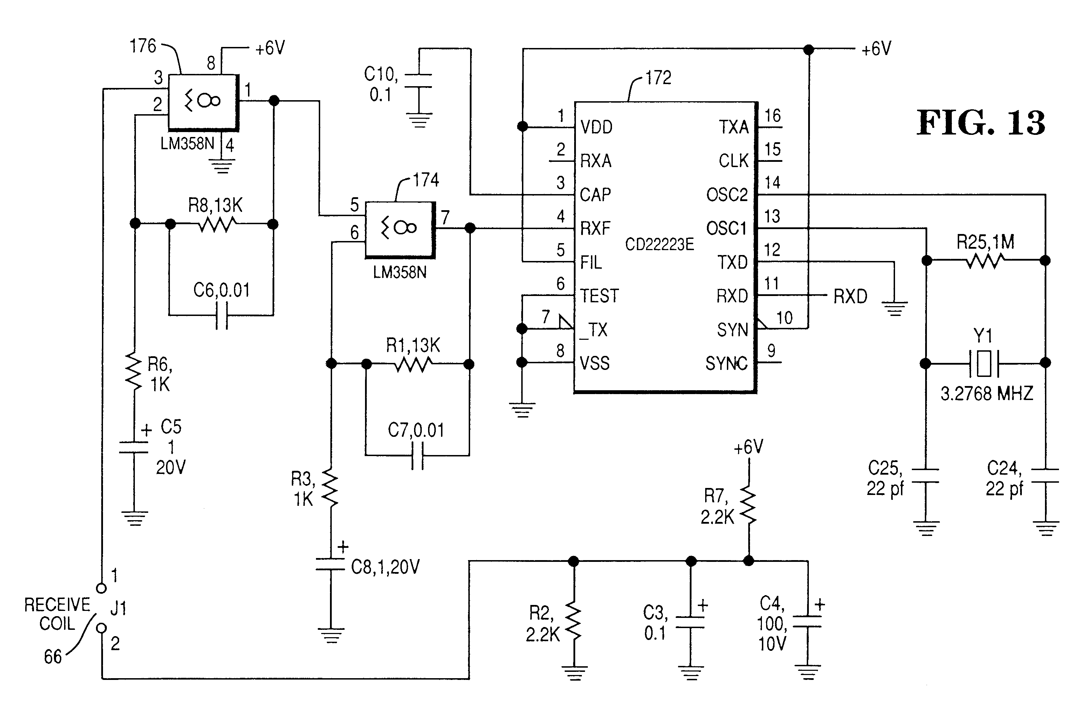

Fig. 13 is a schematic diagram of a process chip and a pair of comparators used in the control system for the rail controller 152 (Fig. 9) of the preferred embodiment of the present invention. The several elements include a microprocessor 172, a first comparator 174, a second comparator 176, and the receive coil 66, earlier shown in Fig. 9. A voltage of +6 volts is applied to the processor 172 and a clock circuit is connected to the OSC1 and OSC2 pins of the processor. An RC circuit is coupled to the input of comparator 174 and to one output thereof, and an RC circuit is coupled to the input of comparator 176 and to one output thereof. The other output of comparator 176 is connected to one side of the receive coil 66 and the other side of the coil is connected to a +6 volts supply.

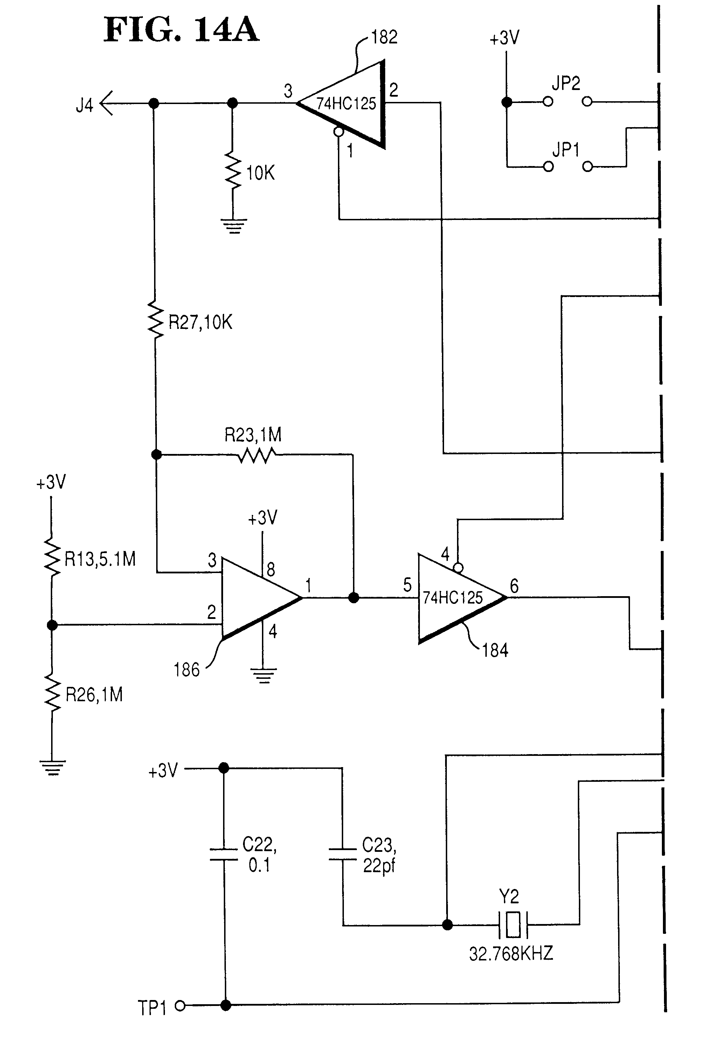

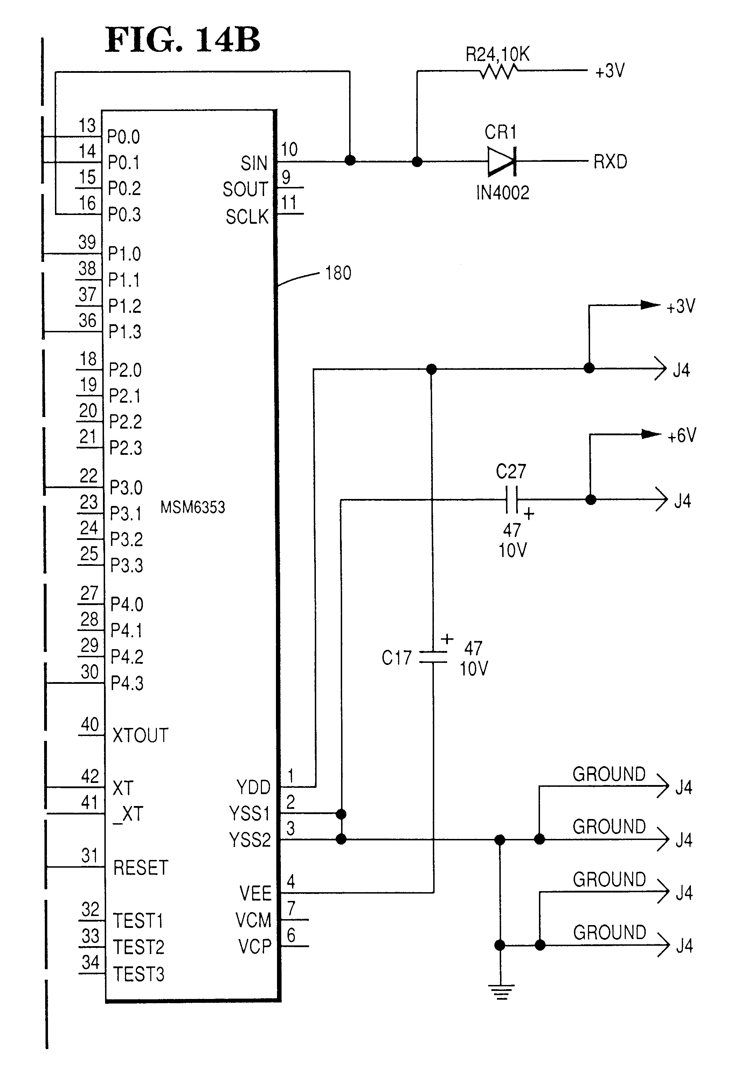

Figs. 14A and 14B show a schematic diagram of a control microprocessor 180 used in the control system for the rail controller 152 (Fig. 9). The processor 180 is coupled to a first inverter 182 through which display tag data is transmitted to the display. The processor 180 is also coupled to a second inverter 184, in turn, coupled to a comparator 186. The second arrangement is constructed in a manner wherein the display module 76 is separated from the rail controller 152.

In the operation of the electronic display system of the present invention, it is seen that such system comprises the controlling computer system illustrated in Figs. 9-14 for the preferred embodiment. The display system also comprises the transceiver/programmer (Fig. 9) with the audio amplifier 56 and the transmit loop 58, the shelf rail controller (Fig. 9), and the individual shelf display tags 88 (Fig. 12).

The controlling computer system includes the computer or in store processor which is capable of interfacing with the data base of the retail store and can operate on that data base to send the necessary data to the various displays throughout the store.

The transceiver/programmer encodes the messages and sends such messages over the inductive loop to the various rail controllers. The transceiver portion of such transceiver/programmer provides the means for transmitting the data to the rail controllers and the programmer portion programs the addresses into the rail controllers and the display tags of the display system.

The rail controller receives the data and control functions from the transceiver and passes these messages on to the appropriate shelf display tags. Each rail controller also serves to filter out messages for shelf display tags that are not coupled to that particular rail controller, as each rail controller is responsible for controlling only the displays on one shelf or a portion thereof. The control functions transmitted between the rail controller and the various shelf display tags are a subset of the control functions transmitted between the transceiver and the various rail controllers.

The shelf display tags electronically display the price and the unit price of the items on the shelves in the store. The shelf display tag is updated by the controlling computer system so that the pricing information displayed on the shelf display tags in the shelves is current or consistent with the scanning information used at the check out counter.

More particularly in the operation of the system, each electronic display tag has a unique address, even for the same product in different locations within the store. A unique address is provided for each and every display tag to ensure that messages are received by the correct display tag. This arrangement enables a common communication link for the entire electronic display system.

At the initial installation of the shelf display system, the unique addresses are programmed into the respective display tags. A special programming station is used to accomplish the programming of the unique addresses into the tags. At the same time that the addresses are being programmed into the display tags, a label printer prints the identification and product information on the labels which are attached to the respective display tags.

Also at the initial installation of the shelf display system, an address is programmed into each rail controller. The rail controller addresses are programmed with the same programmer that is used for programming the unique addresses for the display tags. When the display tags are programmed with the unique addresses, the tags are installed on the shelves at the respective locations of the associated items. The controlling computer system then assumes the updating of information on the shelf display tags for the items on the shelves.

The operation of the low frequency, inductive loop, data transmission system, as shown in the accompanying figures of the drawing, is further described in the control functions for the shelf label displays.

A listing of the control functions for the displays is as follows:

| ASCII FUNCTION | HEX CODE | DEC CODE | CNT LET | FUNCTION |
|---|---|---|---|---|
| NUL | 00 | 0 | @ | |
| SOH | 01 | 1 | A | Start of Message (SOM) |
| STX | 02 | 2 | B | |
| ETX | 03 | 3 | C | End of Message (END) |
| EOT | 04 | 4 | D | |
| ENQ | 05 | 5 | E | Display Address (DAD) |
| ACK | 06 | 6 | F | Start of Price (SPR) |
| BEL | 07 | 7 | G | Start of Unit Price (SUP) |
| BS | 08 | 8 | H | |
| HT | 09 | 9 | I | |
| LF | 0A | 10 | J | |
| VT | 0B | 11 | K | |
| FF | 0C | 12 | L | |
| CR | 0D | 13 | M | |
| SO | 0E | 14 | N | |
| SI | 0F | 15 | O | |
| DLE | 10 | 16 | P | Clear (CLR) |
| DC1 | 11 | 17 | Q | |
| DC2 | 12 | 18 | R | |
| DC3 | 13 | 19 | S | |
| DC4 | 14 | 20 | T | |
| NAK | 15 | 21 | U | Load Address (LAD) |
| SYN | 16 | 22 | V | |
| ETB | 17 | 23 | W | |
| CAN | 18 | 24 | X | |
| EM | 19 | 25 | Y | |
| SUB | 1A | 26 | Z | |
| ESC | 1B | 27 | [ | |
| FS | 1C | 28 | \ | |
| GS | 1D | 29 | ] | |
| RS | 1E | 30 | ^ | |
| US | 1F | 31 | | |
| DEL | 7F | 127 | - | |

The description of the control functions is as follows:

Start of Message (SOM)

This function starts the message to a display and is followed by the display address. The address can be up to 10 digits. The digits can be the ASCII characters 0 through 9 (Hex 30 through Hex 39) or Hex 00 through Hex 09. The four most significant bits are dropped.

If the address received does not match the address previously loaded, the display will ignore the message.

If no address is included after the start of message (SOM) function, the message will be accepted by all displays.

End of Message (END)

This function will be sent at the end of a message to indicate that the message is complete. This function will be followed by a sum check character which will be used to check data integrity. The sum check character will be such that the 2's complement sum of the entire message including the start of message (SOM) function and the sum check character will be zero.

Display Address (DAD)

This function causes the display to display its address. The most significant 5 digits will be displayed in the unit price field and the other 5 digits will be displayed in the price field. The function must be sent by itself with no other data fields present in the message.

When this function is followed by the clear (CLR) function, normal display is restored. No data will be lost by using the display address (DAD) function.

Start of Price (SPR)

The start of price function is sent before any data, which is to be displayed, is actually displayed on the price portion of the display. If more data is sent than can be displayed, the data which exceeds the display capacity will be lost.

Start of Unit Price (SUP)

The start of unit price function is sent before any data, which is to be displayed, is actually displayed on the unit price portion of the display. If more data is sent than can be displayed, the data which exceeds the display capacity will be lost.

Clear (CLR)

This function, when sent after the address, clears the display. If the clear (CLR) function is sent after one of the three field type functions (the display address, the start of price, or the start of unit price), then only that field is cleared.

Load Address (LAD)

The load address function is used to initially load the display address or to change it to a different address. This function is sent after the start of message (SOM) function, but before the address. To prevent this function from changing the address of all displays, an enable switch must be held down on the display which is to be programmed.

The following messages are examples of typical and properly formatted messages which are sent to the displays. Note: The spaces between functions in the examples are not a part of the message.

Programming the Display Address
      SOM LAD 0123456789 END sum

Sending Data to a Display
      SOM 0123456789 SUP 59 SPR 118 END sum

Clearing the Display
      SOM 0123456789 CLR END sum

Clearing a Field
      SOM 0123456789 SUP CLR END sum

Cause a Display to Display its Address

SOM 0123456789 DAD END sum

Cause all Displays to Display their Addresses

SOM DAD END sum

Clear Address Display

SOM DAD CLR END sum

It is thus seen that herein shown and described is a low frequency, inductive loop, data transmission system that uses an audio power amplifier in the loop. The individual displays are powered with batteries so as to provide a wireless-type system and to accomplish the operation with a minimum amount of wire and cable in the low frequency system. The present invention enables the accomplishment of the objects and advantages mentioned above, and while a preferred embodiment has been disclosed herein, variations thereof may occur to those skilled in the art. It is contemplated that all such variations and any modifications not departing from the spirit and scope of the invention hereof are to be construed in accordance with the following claims.

## Claims

1. Electronic price display apparatus comprising a plurality of price display units (64,76,82) for mounting in a retail establishment at respective locations each having a discrete address, and central processing means (52) arranged for selectively accessing each address and controlling each of said display units (64,76,82), characterized by inductive loop data transmission means having a transmission loop (58), driven by audio amplifying means (56), for transmitting data for accessing and controlling said display units, said inductive loop data transmission means being coupled to said central processing means (52) by way of signal modulator means (54), and further characterized by inductive loop receiving means (66) associated with said display units (64,76,82) for receiving data transmitted from said transmission loop (58) and for supplying data for said display units (64,76,82) by way of demodulator means.

2. Apparatus according to claim 1, characterized in that said receiver means comprises a plurality of receiver coils (66) each associated with at least one respective display unit (64,76,82).

3. Apparatus according to claim 1, characterized in that said display units (64,76,82) are inter-connected by a control rail connected to rail control means (152) by way of which each of said addresses is accessed, and in that said receiving means (66) comprises a receiver coil (66) connected to said rail control means (152).

4. Apparatus according to claim 3, characterized by further control rails connected to respective further rail control means (152), further receive coils (66) and further pluralities of display units (64,76,82), in which each of said rail control means (152) has a discrete address for selective accessing and control by said central processing means (52).

5. Apparatus according to any one of claims 1 to 4, characterized in that central processing unit (52) comprises a personal computer.

6. Apparatus according to any one of claims 1 to 5, characterized in that said transmission loop (58) comprises a transmit coil.

7. Apparatus according to any one of claims 1 to 6, characterized in that each of said plurality of display units (64,76,82) includes a bar code and price of the product associated therewith.

8. Apparatus according to any one of claims 1 to 7, characterized by battery means (84) for supplying power to said display units (64,76,82).

9. Apparatus according to any one of claims 1 to 8, characterized in that each of said display units (64,76,82) comprises a plurality of display digits and a driver means (90,126-132) for each digit.

FIG. 1

EP 0 497 533 A2

# FIG. 2

52 — ISP

54 — MODEM

56 — AMP (AUDIO)

58 — TRANSMIT LOOP

60

66 — RECEIVE COIL

64 — DISPLAY

# FIG. 3

72 — CPU

86 — REGISTER

88 — MEMORY

90 — DISPLAY DRIVERS

# FIG. 4

FIG. 5

EP 0 497 533 A2

# FIG. 6A

# FIG. 6B

114

114

118

A12

A11

A10

A9

A8

112

D

F

RGTR

| AD7 | 3 | CD | 2 | BA7 |
| AD6 | 4 | CD | 5 | BA6 |
| AD5 | 7 | CD | 6 | BA5 |
| AD4 | 8 | CD | 9 | BA4 |
| AD3 | 13 | CD | 12 | BA3 |
| AD2 | 14 | CD | 15 | BA2 |
| AD1 | 17 | CD | 16 | BA1 |
| AD0 | 18 | CD | 19 | BA0 |

74LS373

120

# FIG. 6

| FIG. 6A | FIG. 6B | FIG. 6C |
|---------|---------|---------|

# FIG. 6C

AD BUS — 114

BA BUS — 118

A BUS — 120

| pin | X → Y | | pin |
|---|---|---|---|
| 2 | 4096 | | |
| 23 | 2048 | | |
| 21 | 1024 | | |
| 24 | 512 | | |
| 25 | 256 | | |
| BA7 3 | 128 | A8191 / A0000 | |
| BA6 4 | 64 | | |
| BA5 5 | 32 | | |
| BA4 6 | 16 | | |
| BA3 7 | 8 | | |
| BA2 8 | 4 | | |
| BA1 9 | 2 | | |
| BA0 10 | 1 | | |

+5V
26
1

— 114

— 116

2764

22 &  F
28
27 PGM /

+5V

MEM

| pin | | | AD |
|---|---|---|---|
| AF | 19 | | AD7 |
| AF | 18 | | AD6 |
| AF | 17 | | AD5 |
| AF | 16 | | AD4 |
| AF | 15 | | AD3 |
| AF | 13 | | AD2 |
| AF | 12 | | AD1 |
| AF | 11 | | AD0 |
| AF | | | |

FIG. 7A

EP 0 497 533 A2

# FIG. 7B

DISPLAY 12

DISPLAY 13

DISPLAY 14

# FIG. 8A

FIG. 8B

# FIG. 9

# FIG. 10

EP 0 497 533 A2

# FIG. 11

# FIG. 12

FIG. 13

EP 0 497 533 A2

# FIG. 14A

# FIG. 14B